# FASCICULE DE BREVET EUROPEEN

(11) **EP 0 811 325 B1**
(45) Date de publication et mention de la délivrance du brevet: **20.03.2002**
(21) Numéro de dépôt: 96201534.3
(22) Date de dépôt: 04.06.1996
(51) Int. Cl.: A23L 1/10, A23B 9/02, A23L 3/22, A23L 1/182, A23L 1/20

(54) **Cuisson en continu de graines**
Kontinuierliches Kochen von körnigem Material
Continuous cooking of grains

(43) Date de publication de la demande: 10.12.1997
(73) Titulaire: SOCIETE DES PRODUITS NESTLE S.A., 1800 Vevey (CH)
(72) Inventeur: Bauer, Rudolf, 3700 Spiez (CH); Daenzer-Alloncle, Martine, 3510 Konolfingen (CH); Engel, Hans, 3646 Einigen (CH); Hugelshofer, Willy, 3510 Konolfingen (CH)
(74) Mandataire: Thomas, Alain

(56) Documents cités:
- EP-A- 0 196 464
- FR-A- 2 008 187
- GB-A- 1 235 494
- US-A- 2 057 366
- US-A- 2 941 889
- US-A- 3 169 468
- US-A- 3 719 502
- IDF DAIRY PACKAGING NEWSLETTER, vol. 4, no. 113, 1990, page 1-4 XP000605642

## Description

La présente invention a pour objet un procédé de cuisson en continu d'une composition alimentaire à base de graines de céréales et/ou de légumineuses et son utilisation pour la fabrication d'un produit alimentaire.

Traditionnellement, les graines de céréales, notamment les graines de riz, sont cuites dans de l'eau ou dans du lait à l'aide d'un système de chauffage à surfaces racleurs ou dans des réservoirs.

Ainsi, WO 8603379 décrit un appareil de cuisson, dans lequel le produit alimentaire, notamment un produit à base de riz, est cuit à l'aide d'un système de chauffage tubulaire et dans lequel la quantité de liquide contenu dans le produit alimentaire est ajustée au cours du procédé.

Mais, lors d'une cuisson à l'aide d'un système de chauffage à surfaces racleurs, les graines se cassent souvent et, lors d'une cuisson en réservoir, les graines sont souvent partiellement brûlées.

Il existe aussi des procédés, dans lesquels on travaille par injection de vapeur, par exemple les brevets EP 196'464, US 2941889 et US 3169468, mais dans ce cas, il n'y a pas de gonflement des grains dans l'eau, ni en même temps une stérilisation et une cuisson. Dans d'autres procédés, ils travaillent en plusieurs étapes, comme dans US 3719502 et GB 1235494. Le brevet US 2057366 concerne uniquement un dispositif de traitement thermique de légumes et non un procédé. Le brevet FR 2008187 concerne seulement un procédé de trempage du produit à stériliser et finalement l'article de IDF Packaging Newsletter concerne de manière générale l'emballage aseptique de liquide alimentaire avec des morceaux.

La présente invention a pour but de proposer un procédé de cuisson en continu en une seule étape, et en phase aqueuse d'une composition alimentaire à base de graines de céréales et/ou de légumineuses qui permette d'obtenir un produit alimentaire stérile, à la texture homogène et constitué de graines de céréales et/ou de légumineuses entières.

A cet effet, dans le procédé de cuisson en continu d'une composition alimentaire à base de graines de céréales et/ou de légumineuses selon la présente invention :
- on prépare ladite composition dans un milieu aqueux comprenant au moins des graines de céréales et/ou de légumineuses,
- on amène ce mélange à une pression de 5-18 bar,
- on l'amène dans un échangeur de chaleur tubulaire à 110-160°C pendant 2-15 min, de manière à le cuire,
- puis on abaisse la température du mélange, tout en régulant son débit.

On a constaté avec surprise qu'un tel procédé permet effectivement de cuire en continu des graines de céréales et/ou de légumineuses de qualité constante sans les casser et permet ainsi d'obtenir un produit alimentaire stérile à la texture homogène.

Dans la suite de la description, on emploiera le terme "suspension" dans le sens "mélange de graines de céréales et/ou de légumineuses dans un milieu aqueux".

Pour ce faire, on peut préparer en continu à une température de 4-90°C une suspension comprenant au moins des graines crues de céréales et/ou de légumineuses, par exemple.

De préférence, on prépare une suspension comprenant au moins des graines crues de céréales et/ou de légumineuses et du lait et/ou de l'eau. On peut préparer une suspension comprenant au moins 10-20% de graines crues de céréales et/ou de légumineuses et 80-90% de lait et/ou d'eau, par exemple.

Les graines de céréales peuvent être des grains de riz, de blé ou de maïs, par exemple.

Les graines de légumineuses peuvent être des graines de haricot, de soja ou de lentille, par exemple.

Le lait, auquel on peut ajouter des additifs, tel que du sucre, des émulsifiants ou des gélifiants, peut être du lait écrémé ou non et peut être du lait frais, du lait en poudre reconstitué ou du lait concentré, par exemple.

On peut alors amener la suspension ainsi préparée à une presion de 5-18 bar à l'aide d'au moins une pompe centrifuge, par exemple. On peut déterminer la pression à laquelle on amène la suspension en tenant compte de sa viscosité, par exemple.

Au cours de cette étape, on peut utiliser une ou plusieurs pompes centrifuges du type Fristam FP 742 commercialisée par la Société Stam Postfach 800880 - 21008 Hamburg, par exemple.

Puis, on amène la suspension dans un échangeur de chaleur tubulaire. Les tubes de l'échangeur de chaleur tubulaire peuvent être chauffés indirectement à la vapeur, par exemple.

Au cours dudit procédé en continu, la pression et le débit de la suspension dépendent du diamètre des tubes. De préférence, le débit de la suspension est de 0,6-1,5 m/s au moins jusqu'à la sortie de l'échangeur de chaleur tubulaire.

Enfin, on peut abaisser la température de la suspension à 7-80°C, tout en régulant le débit de la ligne avec une pompe positive, par exemple. On peut abaisser la température de la suspension dans un ou plusieurs refroidisseurs tubulaires placés en série, par exemple. On peut réguler le débit de la suspension en plaçant la pompe positive en aval du premier refroidisseur tubulaire, par exemple. De préférence, en amont de la pompe positive, la pression est suffisante, pour permettre un débit continu de la ligne.

Le procédé de cuisson en continu d'une composition alimentaire à base de graines de céréales et/ou de légumineuses selon la présente invention est décrit plus en détails dans les exemples non limitatifs ci-après où les parties et pourcentages sont donnés en poids, sauf indication contraire.

### Exemple 1

On prépare un gâteau de riz par la mise en oeuvre du procédé selon la présente invention.

Pour ce faire, on prépare en continu à une température de 80°C, dans un réservoir, un mélange contenant 55,5% de lait pasteurisé écrémé, 20,15% d'eau et 9,36% de sucre. Puis on ajoute en continu 10% de graines crues de riz et 3,2% d'huile de coco à ce mélange, de manière à obtenir une suspension.

On amène alors cette suspension à une pression de 10 bar à l'aide de 2 pompes centrifuges du type Fristam FP 742 commercialisées par la Société Stamp Postfach 800880-21008 Hamburg, placées en série à la sortie du mélange en continu.

On amène ensuite la suspension à 120° C pendant 9 min dans un échangeur de chaleur tubulaire.

On effectue un premier refroidissement. Pour ce faire, on abaisse la température de la suspension à 60° C dans un refroidisseur tubulaire.

On ajoute alors, en continu, à la suspension, une préparation froide contenant 1,06% de protéines concentrées de petit-lait, 0,42% de gomme xanthane, 0,05% de sel et 0,04% d'agar-agar.

On abaisse la température de la suspension à 8° C. Pour ce faire, on amène la suspension dans 3 refroidisseurs tubulaires montés en série. En aval du premier de ces 3 refroidisseurs tubulaires, on régule le débit de la suspension avec une pompe positive.

La suspension ainsi préparée permet de réaliser des gâteaux de riz que l'on stocke à température ambiante.

### Exemple 2

On prépare du riz au lait par la mise en oeuvre du procédé selon la présente invention.

Pour ce faire, on prépare en continu à une température de 100° C un mélange contenant 30% de graines crues de riz et 70% d'eau. Puis on ajoute différents ingrédients à ce mélange, de manière à obtenir une suspension contenant 10% de graines de riz, 24,54% d'eau, 9,92% de sucre en poudre, 5,19% de crème, 1,04% de lait écrémé en poudre et 0,1% de sel et 49,21% de lait entier.

On amène alors cette suspension à une pression de 10 bar à l'aide de 2 pompes centrifuges du type Fristam FP 742, placées en série à la sortie du réservoir.

On amène ensuite la suspension à 127° C pendant 3 min dans un échangeur de chaleur tubulaire.

On abaisse la température de la suspension à 10° C. Pour ce faire, on amène la suspension dans 3 refroidisseurs tubulaires montés en série. En aval du premier refroidisseur tubulaire, on régule le débit de la suspension avec une pompe positive.

La suspension ainsi préparée permet de réaliser du riz au lait que l'on stocke à température ambiante.

## Revendications

1. Procédé de cuisson en continu d'une composition alimentaire à base de graines de céréales et/ou de légumineuses , dans lequel :
- on prépare ladite composition dans un milieu aqueux comprenant au moins des graines de céréales et/ou de légumineuses,
- on amène ce mélange à une pression de 5-18 bar,
- on l'amène dans un échangeur de chaleur tubulaire à 110-160 °C pendant 2-15 min, de manière à le cuire,
- puis on abaisse la température du mélange, tout en régulant son débit.

2. Procédé selon la revendication 1, dans lequel on prépare à une température de 4-90 °C le mélange comprenant au moins des graines crues de céréales et/ou de légumineuses.

3. Procédé selon la revendication 1, dans lequel on prépare le mélange comprenant au moins des graines crues de céréales et/ou de légumineuses et du lait et/ou de l'eau.

4. Procédé selon la revendication 2, dans lequel on prépare un mélange comprenant 10-20 % de céréales crues de céréales et/ou de légumineuses et 80-90 % de lait et/ou d'eau.

5. Procédé selon la revendication 1, dans lequel on amène le mélange à une pression de 5-18 bar à l'aide d'au moins une pompe centrifuge.

6. Procédé selon la revendication 1, dans lequel le débit du mélange est de 0,6-1,5 m/s au moins jusqu'à la sortie de l'échangeur de chaleur tubulaire.

7. Procédé selon la revendication 1, dans lequel on abaisse la température du mélange à 7-80 °C, tout en régulant le débit de la ligne avec une pompe positive.

## Patentansprüche

1. Verfahren zum kontinuierlichen Kochen einer Nahrungsmittelzusammensetzung auf der Grundlage von Samen von Getreide und/oder Hülsenfrüchten, bei dem man
- diese Zusammensetzung in einem wässrigen Medium herstellt, das mindestens Samen von Getreide und/oder Hülsenfrüchten enthält,
- diese Mischung unter einen Druck von 5-18 bar setzt,
- sie für 2-15 min in einen Rohrwärmetauscher auf 110-160°C bringt, so dass sie gekocht wird,
- und dann die Temperatur der Mischung unter Regulierung ihres Durchsatzes absenkt.

2. Verfahren nach Anspruch 1, bei dem man die Mischung, die mindestens rohe Samen von Getreide und/oder Hülsenfrüchten enthält, bei einer Temperatur von 4-90°C herstellt.

3. Verfahren nach Anspruch 1, bei dem man eine Mischung herstellt, die mindestens rohe Samen von Getreide und/oder Hülsenfrüchten und Milch und/oder Wasser enthält.

4. Verfahren nach Anspruch 2, bei dem man eine Mischung herstellt, die 10-20% rohe Samen von Getreide und/oder Hülsenfrüchten und 80-90% Milch und/oder Wasser enthält.

5. Verfahren nach Anspruch 1, bei dem man die Mischung mit Hilfe von mindestens einer Kreiselpumpe unter einen Druck von 5-18 bar setzt.

6. Verfahren nach Anspruch 1, bei dem der Durchsatz der Mischung mindestens bis zu dem Austritt des Rohrwärmetauschers 0,6-1,5 m/s beträgt.

7. Verfahren nach Anspruch 1, bei dem man die Temperatur der Mischung unter Regulierung des Durchsatzes der Strecke mit einer Pumpe mit Zwangsförderung auf 7-80°C absenkt.

## Claims

1. Method for continuously cooking a food composition based on cereal grains and/or leguminous seeds, wherein:
- the said composition is prepared in an aqueous medium including at least cereal grains and/or leguminous seeds,
- this mixture is brought to a pressure of 5-18 bar,
- it is brought to 110-160°C in a tubular heat exchanger for 2-15 min., so as to cook it,
- the temperature of the mixture is lowered while regulating its flow rate.

2. Method according to claim 1, wherein the mixture including at least raw cereal grains and/or leguminous seeds is prepared at a temperature of 4-90°C.

3. Method according to claim 1, wherein the mixture is prepared comprising at least raw cereal grains and/or leguminous seeds and milk and/or water.

4. Method according to claim 2, wherein a mixture is prepared comprising 10-20 % raw cereal grains and/or leguminous seeds and 80-90 % milk and/or water.

5. Method according to claim 1, wherein the mixture is brought to a pressure of 5-18 bar with the aid of at least one centrifugal pump.

6. Method according to claim 1, wherein the flow rate of the mixture is from 0.6-1.5 m/s at least up to the outlet from the tubular heat exchanger.

7. Method according to claim 1, wherein the temperature of the mixture is reduced to 7-80°C, while regulating the flow rate in the line with a positive pump.
